# EUROPEAN PATENT APPLICATION

(11) **EP 0 684 408 A1**
(43) Date of publication of application: **29.11.1995**
(21) Application number: 95108014.2
(22) Date of filing: 24.05.1995
(51) Int. Cl.: F16H 55/36, F16C 33/46

(54) **Roller bearing sheave assembly**

(30) Priority: 27.05.1994 US 250018
(71) Applicant: HARKEN INC., Pewaukee, Wisconsin 53072 (US)
(72) Inventor: Lob, Charles J., Oconomowoc, WI 53066 (US)
(74) Representative: Flosdorff, Jürgen, Dr.

(57) **Abstract**

The assembly has an outer grooved rotatable sheave (14) for receiving a line, a central hub (10), and a plurality of rollers (20) between the sheave (14) and hub (10). The center of the hub (10) has a circular groove (34) for receiving a bearing retainer (36). The bearing retainer (36) has outer grooves (40) which interfit with central grooves (44) in each of the rollers (20). The retainer (36) serves to maintain the rollers (20) in a spaced relation to reduce friction and prevent axial displacement of the rollers from the assembly.

## Description

### Background of the Invention

This invention relates to a sheave assembly in which roller bearings are disposed between a rotating outer race and a relatively fixed inner race. In particular, the invention relates to block or pulley devices in which the inner race is connected to a support and the outer race has a groove around the periphery for movable support of a flexible member, such as a line or a rope.

Bearing block or sheave assemblies are used extensively on sailing craft to control the sails and for a variety of other purposes. Various types of bearing systems have been employed, including cylindrical roller bearings disposed between cylindrical inner and outer races. The roller bearings are not retained by cages, and adjacent bearings rub against each other when the outer race is placed under load by a line and rotated. Also, the bearings must be constrained from sideways movement to prevent them from falling out, which increases the complexity of the parts and the assembly. Replacement of worn or defective bearings is also difficult and time consuming.

### Summary of the Invention

In accordance with the present invention, the bearing block or sheave assembly comprises an outer race and an inner race, with the races having facing cylindrical surfaces. The inner race has a central circumferential groove. A bearing retainer or cage, in the form of a solid or a snap ring, is loosely disposed in the groove and extends toward the outer race. The bearing retainer is in the form of a sprocket and has a plurality of grooves or restricted openings around the periphery.

A plurality of roller bearings are provided, and each bearing has a central circumferential groove. The grooves of the bearings are inserted into the grooves of the retainer, preferably by a snap fit. The diameter of the bearings relative to the spacing between grooves is such that the bearings are retained in a spaced circumferential relation, and adjacent bearings cannot rub against each other. Thus, rubbing friction losses between adjacent bearings are eliminated. Also, the retainer serves to prevent axial or lateral movement of the bearings, so special outer plates or constraints at the ends of the bearings are not required.

The use of a central bearing retainer greatly reduces the complexity of parts required in prior art devices and substantially reduces assembly time. The sheave assembly can be opened up without the bearings falling out, and replacement of bearings can be accomplished quickly and easily.

### Brief Description of the Drawings

Figure 1 is a perspective view of the roller bearing sheave assembly of the present invention in the form of a bearing block.

Figure 2 is a perspective view similar to Figure 1, with one of the side plates and outer race removed.

Figure 3 is a perspective view of the assembly of the inner race bearings, and bearing retainer.

Figure 4 is a perspective view of the bearing retainer and bearings.

Figure 5 is an enlarged fragmentary side view showing the relationship between the inner race, outer race, bearings and bearing retainer.

### Description of the Preferred Embodiments

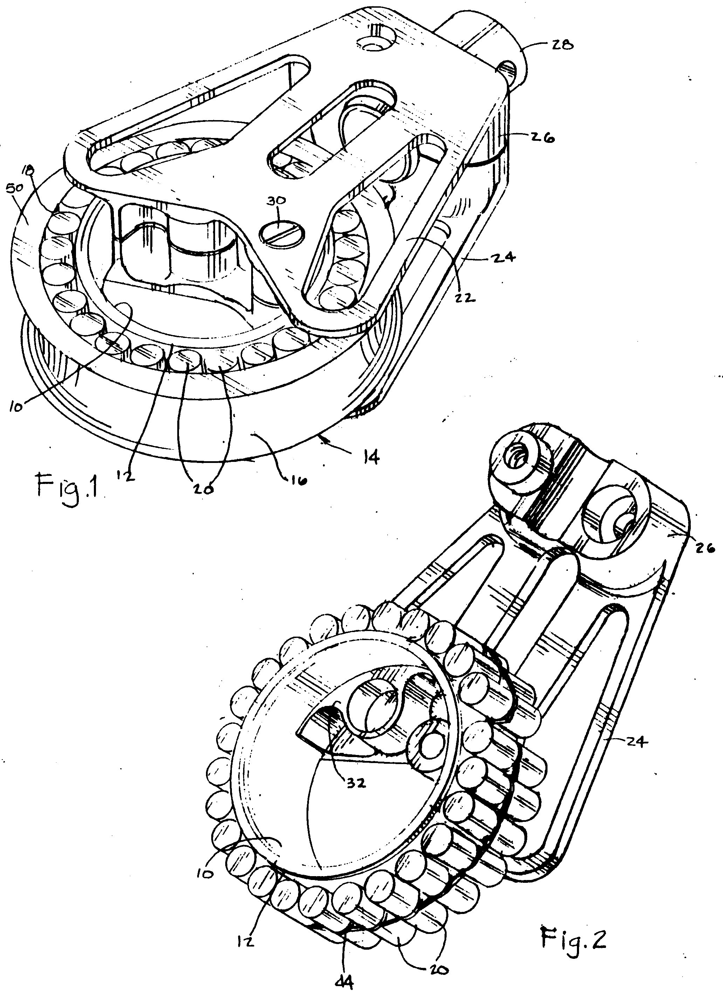

Figure 1 illustrates the sheave assembly in the form of a bearing block. The block comprises an inner hub 10 having a convex cylindrical wall 12 defining an inner race and a rotatable outer sheave 14 having an outwardly facing groove 16 for receiving a line, and a concave cylindrical wall 18 defining an outer race. A plurality of roller bearings 20 are disposed between the walls 12 and 18 and are in roller bearing engagement therewith.

The central hub 10 may be secured to a pair of spaced side plates 22 and 24, which extend beyond the sheave 14 and define a head 26 carrying a post 28 in a conventional manner. The side plates are secured to the central hub and at the head by removable screws 30. As shown in Figure 2, the side plates and central hub may have complimentary interfitting parts to simplify assembly and to provide selective reinforcement of the inner race 12 beneath the head 26 at 32, along an arc where a majority or substantially all of the load is carried by the block.

As with a conventional block, the sheave assembly is supported from the post 28, with the outer line carrying sheave 14 and race 18 rotating around the relatively fixed inner race 12.

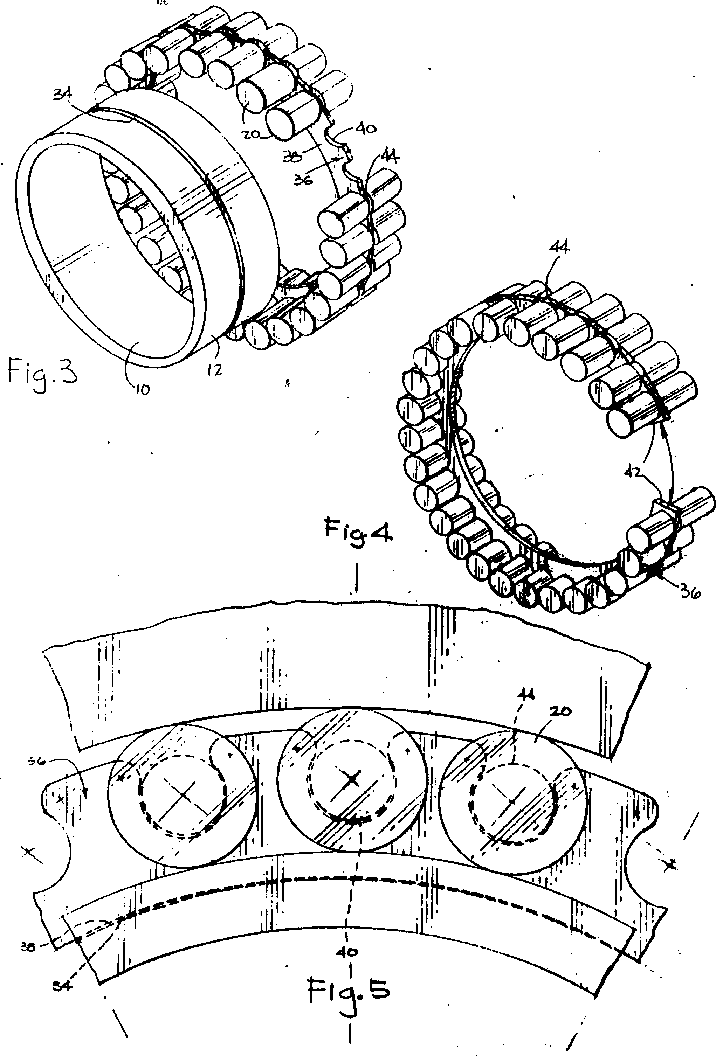

As best shown in Figures 2-5, a circumferential groove 34 is provided in a central portion of the inner race wall 12. The groove 34 and inner race wall 12 may also be defined by interfitting portions extending from the side plates. A bearing retainer, generally indicated at 36 is in the form of a narrow band having an inner circular edge 38 and a plurality of outer spaced U-shaped grooves 40. With reference to Figure 4, the retainer 36 is preferably constructed from resilient material such as metal or durable plastic, and is split with facing free edges 42 as shown, in order to enable temporary enlargement of the diameter and to enable the ring 36 to be installed in the groove 34, with the sprocket-like portion extending into the space between the inner and outer races. If the groove 34 is defined by interfitting parts, the retainer 34 may be continuous and solid. The inner diameter of the ring 36 is preferably somewhat greater than the inner diameter of the groove 34 as shown in Figure 5 to allow free rotation of the ring relative to the groove and the inner race.

Each of the rollers 20 is provided with a central circumferential groove 44, adapted to be inserted into, and retained by the U-shaped grooves 40 of the retaining ring 36. The diameter of grooves 40 is slightly greater than the diameter of the grooves 44 in the rollers, but the opening into the ring grooves 40 may be somewhat restricted to enable the rollers to be inserted into the grooves in a snap fit relationship. When assembled, the ends of the rollers are entirely exposed between the inner and outer races, as shown in Figure 1.

As shown in the Figures, the spacing between the centers of the retainer grooves 40 is sufficient relative to roller diameter, in order to retain the rollers in a uniform spaced relationship and to prevent adjacent rollers from rubbing against each other. The retainer 36 also prevents axial displacement of the rollers, so that the ends need not be confined but may be entirely exposed, as shown. Thus, there is no possibility of friction between the ends of the rollers and the side plates.

As shown in Figure 5, when the retaining ring and roller assembly is installed on the inner race, the bottom of the groove 40 in the ring 36 is spaced from the bottom of the groove 44 in the roller, and hence, all axial loads are borne and transferred from the outer race to the inner race by the bearings and not the retainer.

In order to retain the sheave 14 from axial displacement and to accommodate axial loads and minimize friction between the sheave 14 and the side plates 22 and 24, the facing surfaces of the sheave and side plates may be provided with anti-friction means. In the embodiment shown, the sides of the sheave 16 may be provided with a ring 50 of a self-lubricating or slippery polymer, which may be press fitted into the sheave as shown. Coaction between the ring 50 and side plates 22 and 24 prevents axial displacement of the sheave 14, while minimizing rotary sliding friction. Other types of low friction or bearing surfaces may be provided either on the sheave or side plates or both.

The block as shown in Figure 1 is operated by supporting the block from the post 28 and passing the free end of a line (not shown) between the side plates and around and into the groove 16 of the outer sheave. As the outer sheave rotates, the bearings 20 roll between the inner and outer races to reduce friction. Also, rolling of the bearings causes the bearings and associated retainer 36 to rotate or circulate around the inner race, so that major loads are not constantly borne by the same bearings. The bearings themselves may be fabricated from a high strength, self-lubricating polymer, but they may also be fabricated from metal.

It may be seen that the entire unit may be disassembled by removal of only a few screws and by removal of the retainer 36 and bearings 20 as a complete assembly. Thus, an entire new set of bearings can be quickly and easily installed.

Because the rollers are maintained in a spaced relation, rubbing between adjacent rollers is eliminated. This allows the sheave to be turned at higher loads without excessive friction which would prevent free turning.

## Claims

1. A roller bearing sheave assembly comprising an inner race, a rotatable outer race around said inner race, a plurality of roller bearings between said inner race and said outer race in bearing engagement therewith, and retainer means between a central portion of said roller bearings and said inner race for maintaining said roller bearings in a spaced relationship.

2. The assembly of Claim 1 wherein said retainer means comprises a ring rotatably mounted on said inner race, said ring having a plurality of grooves embracing said roller bearings between said inner and outer races.

3. The assembly of Claim 1 wherein said inner race has a circumferential central groove therein, and said ring is retained in said groove.

4. The assembly of Claim 3 wherein said ring is in the form of a snap fit ring.

5. The assembly of Claim 2 wherein the grooves in said ring are substantially U-shaped, and corresponding grooves are provided in said roller bearings, with the grooves in the roller bearings interfitting with the grooves of said ring.

6. The assembly of Claim 5 wherein the grooves of said ring are open, and said rollers snap fit into roller grooves.

7. The assembly of Claim 1 wherein said inner and outer races are cylindrical surfaces, and said rollers are cylindrical bodies.

8. The assembly of Claim 1 additionally comprising means for securing inner race to a support.

9. A roller bearing sheave assembly comprising an outer race rotatable about an axis and having an outer circumferential groove for receiving a flexible line and an inner annular concave wall defining an outer bearing race, an inner convex annular wall defining an inner bearing race spaced from said outer race, a plurality of roller bearings in bearing engagement between said inner and outer races, a circular circumferential recess in said inner annular wall, and a bearing retainer means retained axially in said recess for retaining said roller bearings in a spaced relationship.

10. The assembly of Claim 9 wherein the bearing retainer means comprising a ring extending from said groove, a plurality of rounded grooves in said ring, and a central groove in each of said roller bearings disposed in respective grooves of said ring, said bearing retainer means also preventing axial displacement of said roller bearings.

11. A roller bearing sheave assembly comprising an inner race having a first arcuate bearing surface, an outer sheave having an outwardly facing circumferential groove and an inner second arcuate bearing surface, a plurality of roller bearings between said first and second bearing surfaces, each of said roller bearings having opposed ends, said outer sheave being rotatable on said bearings about an axis around said inner race, and retaining means located intermediate the ends of said roller bearings for retaining said roller bearings in a circumferentially spaced relation.

12. The assembly of Claim 11 wherein said retaining means additionally comprises means for retaining said roller bearings against axial movement parallel to said axis of rotation.

13. The assembly of Claim 11 wherein the ends of said roller bearings are entirely exposed between said inner and outer races.

14. The assembly of Claim 12 wherein said retaining means is rotatable around said inner race and embraces said roller bearings.

15. The assembly of Claim 12 wherein said retaining means is disposed in a circular recess in said inner race.

16. The assembly of Claim 11 additionally comprising a pair of side plates secured to said inner race, said side plates extending over said outer sheave, and antifriction means between said side plates and said outer sheaves for reducing friction therebetween.
